(19) Europäisches Patentamt
European Patent Office
Office européen des brevets

(11) Veröffentlichungsnummer: **0 080 645**
**B1**

# (12) EUROPÄISCHE PATENTSCHRIFT

(45) Veröffentlichungstag der Patentschrift: **02.05.85**

(51) Int. Cl.⁴: **C 08 K 5/17**, C 08 L 21/00

(21) Anmeldenummer: **82110549.1**

(22) Anmeldetag: **16.11.82**

(54) **Elastomere mit korrosionshemmenden Eigenschaften.**

(30) Priorität: **27.11.81 DE 3147154**

(43) Veröffentlichungstag der Anmeldung:
**08.06.83 Patentblatt 83/23**

(45) Bekanntmachung des Hinweises auf die Patenterteilung:
**02.05.85 Patentblatt 85/18**

(84) Benannte Vertragsstaaten:
**DE FR GB IT NL**

(56) Entgegenhaltungen:
**GB - A - 1 259 759**
**US - A - 4 051 066**

(73) Patentinhaber: **BAYER AG, Konzernverwaltung RP Patentabteilung, D-5090 Leverkusen 1 Bayerwerk (DE)**

(72) Erfinder: **Roos, Ernst, Dr., Am Geus Garten 6, D-5068 Odenthal (DE)**
Erfinder: **Behr, Sigurd, Dipl.-Ing., Knipprather Strasse 76, D-4019 Monheim (DE)**

**EP 0 080 645 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung betrifft Elastomere mit korrosionshemmenden Eigenschaften, die dadurch erzielt werden, dass man den Elastomeren Verbindungen zusetzt, die eine Korrosion verhindern.

Es ist bekannt, dass natürliche und synthetische Elastomere auf Eisenmetalle, Nichteisenmetalle und deren Legierungen einen korrosionsfördernden Einfluss ausüben. Man nimmt an, dass dieser Einfluss weniger auf das Polymer selbst als auf die Verarbeitungshilfsmittel zurückzuführen ist, die vom Polymerisationsprozess über die Konfektionierung des Rohkautschuks bis zur Compoundierung und Vernetzung zum fertigen Artikel in grosser Zahl mit dem Elastomer in Berührung kommen oder diesem zugesetzt werden.

Von dieser Metallkorrosion sind insbesondere mechanische Vorrichtungen betroffen, die Gummidichtungen, Dichtungsmanschetten, O-Ringe oder Gummi mit Metalleinlagen, mit Drähten mit verzinktem, ermessingtem oder einfachem Stahlcord enthalten; also Vorrichtungen, bei welchen ein mehr oder weniger enger Kontakt zwischen Metall und Elastomer vorliegt. Der Korrosionseffekt kann dabei durch weitere äussere Einflüsse verstärkt werden, wie z.B. durch Zutritt von korrosiven Flüssigkeiten und Gasen. Bekannt sind z.B. die negativen Effekte von Salzwasser, Salzspray und Autoabgasen, zumal wenn diese bei höheren Temperaturen, z.B. im Motorenraum von Kraftfahrzeugen, einwirken.

Es hat daher nicht an Versuchen gefehlt, Korrosionsschutzmittel aufzufinden, um diese Korrosionseffekte zu hemmen.

So wurden u.a. als Korrosionsinhibitoren schon Alkalinitrite und Alkalibenzoate, aber auch Fettsäuren und Amine sowie deren Salze vorgeschlagen. In neuerer Zeit wurde durch die US-PS Nr. 4051066 auch die Verwendung von Salzen aromatischer Carbonsäuren mit Aminen bekannt, die eine Korrosionshemmung der damit ausgerüsteten Elastomeren bewirken.

Die bisher vorgeschlagenen Korrosionsinhibitoren weisen noch Mängel auf. So sind einige der Mittel, z.B. die gemäss US-PS Nr. 4051066, noch zu flüchtig oder zu gut wasserlöslich, so dass der korrosionshemmende Effekt zu schwach ist oder zu schnell verlorengeht; andere zeigen Unverträglichkeit mit den Elastomeren oder deren Verarbeitungshilfsmitteln oder bilden klebrige Oberflächen auf den damit ausgerüsteten Artikeln.

Es wurde gefunden, dass man unter Vermeidung der geschilderten Nachteile Elastomere mit ausgezeichneten korrosionshemmenden Eigenschaften erhält, wenn man diesen wirksame Mengen eines Umsetzungsproduktes aus einem Amin der Formel

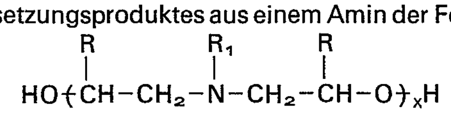

in der

X Zahlen von 5 bis 30,

R Wasserstoff oder $C_1$-$C_6$-Alkyl, und

$R_1$ $C_1$-$C_{18}$-Alkyl, $C_5$-$C_6$-Cycloalkyl oder $C_7$-$C_8$-Aralkyl

darstellen,
mit einer aromatischen Carbonsäure und gegebenenfalls einer Fettsäure zusetzt.

Die wirksamen Mengen sind dem Durchschnittsfachmann bekannt bzw. können leicht durch einfache Versuche ermittelt werden. Bevorzugt werden 0,1 bis 10, insbesondere 0,5 bis 3 Gew.-%, bezogen auf Elastomer, zugesetzt.

Das Verhältnis der aromatischen Carbonsäure sowie gegebenenfalls der Fettsäure zum Amin ist beliebig. Man kann durch entsprechende Variation das Wirkungsspektrum steuern. Als vorteilhaft hat sich herausgestellt, wenn pro Stickstoffäquivalent des Amins 0,2 bis 1, insbesondere 0,4 bis 1 mol aromatischer Carbonsäure und 0 bis 0,8, insbesondere 0 bis 0,6 mol Fettsäure im Umsetzungsprodukt vorhanden sind.

Die diesen Korrosionsschutzmitteln zugrundeliegenden Aminkomponenten stellen stickstoffhaltige Polykondensationsprodukte dar, die im folgenden auch als basische Polyether bezeichnet werden. Ihre Herstellung wird u.a. in der DE-AS Nr. 1495835 beschrieben. Bei der bevorzugten Herstellung handelt es sich um eine Polykondensation von N,N-Di-2-hydroxyalkylaminen in Gegenwart eines sauren Katalysators unter Austritt von Wasser. Sie verläuft formal nach dem Schema

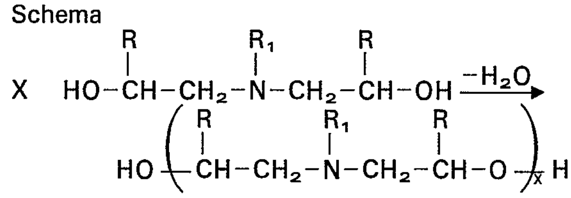

worin X sowie R und $R_1$ die in der allgemeinen Formel I angeführten Bedeutungen haben.

Vom technischen und ökonomischen Standpunkt aus sind solche N,N-Di-2-hydroxyalkylamine besonders gut und preiswert zugänglich, die durch Umsetzung von primären aliphatischen, cycloaliphatischen und araliphatischen Aminen mit $C_1$-$C_6$-Alkylenoxiden, vorzugsweise mit Ethylenoxid (R=H) oder Propylenoxid ($R=CH_3$) hergestellt werden. Als Amine seien beispielsweise genannt:

Methylamin, Ethylamin, Propylamin, Isopropylamin, n-, iso-, sek.- und tert.-Butylamin, Amylamin, Hexylamin, 2-Ethylhexylamin, Decylamin, Dodecylamin, Tetradecylamin, Stearylamin, Cyclopentylamin, Cyclohexylamin, 2-, 3- und 4-Methylcyclohexylamin, 3,3,5-Trimethylcyclohexylamin, Benzylamin, 2-Phenylethylamin.

Bevorzugt werden aliphatische und cycloaliphatische Amine, z.B. n-Butylamin und Cyclohexylamin.

Die Polykondensation der N,N-Di-2-hydroxyalkylamine wird bis zu Werten von X=5 bis 30 durchgeführt, was je nach Amin- und Alkylenoxidkomponente Molekulargewichten des basischen Polyethers von etwa 500 bis 5000 entspricht. Bevorzugt werden Molekulargewichte im Bereich von 800 bis 2000 (MG-statistisch).

Die Salzbildung der basischen Polyether mit den aromatischen, bevorzugt $C_6$-$C_{12}$-Carbonsäuren und gegebenenfalls den gesättigten oder ungesät-

tigten, bevorzugt $C_8$-$C_{20}$-Fettsäuren, kann durch einfaches Vermischen der Komponenten bei Normaltemperatur oder erhöhter Temperatur erfolgen und wird zweckmässigerweise im Anschluss an die Polykondensationsreaktion im gleichen Reaktionsgefäss durchgeführt.

Geeignete aromatische Carbonsäuren können durch die Formel

$$R_2-COOH$$

wiedergegeben werden, in der $R_2$ einen Arylrest, bevorzugt $C_6$-$C_{12}$-Arylrest darstellt, der gegebenenfalls ein- oder zweifach substituiert sein kann durch $C_1$-$C_6$-Alkyl, Hydroxyl, Nitro. Weiterhin können noch ein oder zwei weitere Carboxylgruppen vorhanden sein.

Als geeignete aromatische Carbonsäuren seien genannt: Benzoesäure, o-, m- p-Methylbenzoesäure, 4-tert.-Butylbenzoesäure, 4-Phenylbenzoesäure, o-, m-, p-Nitrobenzoesäure, 3,5-Dinitrobenzoesäure, 4-Methyl-3-nitrobenzoesäure, Phthalsäure, Isophthalsäure, Terephthalsäure, 1-Naphthalincarbonsäure, 1-Hydroxy-benzoesäure, 1-Hydroxy-2-naphthalincarbonsäure.

Bevorzugt wird die Benzoesäure.

Als geeignete gesättigte oder ungesättigte, bevorzugt $C_8$-$C_{20}$-Fettsäuren, werden beispielsweise genannt:

2-Ethylhexansäure, Decansäure, Dodecansäure, Tetradecansäure, Hexadecansäure, Octadecansäure, Undecyclensäure, Ölsäure, Stearinsäure, Linolsäure und Linolensäure. Geeignet sind aber auch Gemische von Fettsäuren, wie sie z.B. bei der Verseifung von natürlichen Rohstoffen, wie z.B. Palmöl (Kokosvorlauffettsäuren, Kokosfettsäuregemisch), Erdnussöl, Baumwollsaatöl, Sojabohnenöl, Sonnenblumenöl, Rapsöl, Schweineschmalz und Fischölen, anfallen. Bevorzugt sind Ölsäure und/oder Stearinsäure.

Die Salze der basischen Polyether stellen im allgemeinen mehr oder weniger viskose Flüssigkeiten (Öle) dar, die sich in den Elastomeren leicht und homogen verteilen lassen. Besonders die gleichzeitige Verwendung von aromatischen Carbonsäuren und Fettsäuren in unterschiedlichen Mengenverhältnissen bei der Salzbildung gestattet die Anpassung der Salze an die unterschiedlichen Anforderungen, wie sie bei der Einbringung und Verteilung in die einzelnen Elastomeren und bei deren Anwendung vorliegen können.

Aus produktionstechnischen Gründen kann es bei Lösungselastomeren zweckmässig sein, das Korrosionsschutzmittel der Lösung des Kautschuks zuzusetzen, bevor man den Festkautschuk isoliert. Bei Kautschuken, die nach Emulsionsverfahren hergestellt werden, oder bei Naturkautschuklatex kann es vorteilhaft sein, das Korrosionsschutzmittel dem Latex vor der Koagulation zum Festkautschuk beizumischen. Die ölige Konsistenz des Korrosionsschutzmittels erlaubt aber auch sein Aufsprühen auf Kautschukkrümel oder Kautschukfelle oder die Zugabe im Innenmischer oder auf der Walze.

Durch das variable Mengenverhältnis von aromatischen Carbonsäuren und den Fettsäuren in den Salzen kann man auch die Diffusions- und sonstigen Transportvorgänge und damit letztlich auch die Wirkungshöhe und Wirkungsdauer bei der Korrosionshemmung der damit ausgerüsteten Elastomeren optimal beeinflussen.

Während nämlich die Stearate oder Oleate der basischen Polyether für sich allein praktisch keine Korrosionsschutzwirkung zeigen, erreichen Salze, die zusätzlich noch relativ geringe Mengen (z.B. 0,2 mol pro Stickstoffäquivalent) an Benzoesäure enthalten, bereits eine ebenso hohe Korrosionshemmwirkung, wie sie ein Salz der Benzoesäure allein mit einem Gehalt von beispielsweise 0,4 oder 0,6 mol Benzoesäure pro Stickstoffäquivalent des basischen Polyethers aufweist.

Bezüglich der Elastomeren, die durch den Zusatz der Salze ausgerüstet werden, unterliegt man keinen Einschränkungen. Es kommen z.B. Naturkautschuk, Styrol/Butadien-Kautschuk, Polybutadien, Polyisopren, Polychloropren, Acrylnitril/Butadien-Kautschuk, Butylkautschuk, Ethylen/Propylen-Kautschuk (EPM), Ethylen/Propylen-Dienkautschuk (EPDM), Silikonkautschuk, Epichlorhydrinkautschuk, Acrylatkautschuk sowie Elastomere auf Basis von chloriertem oder chlorsulfoniertem Polyethylen und Polyurethanelastomere in Frage. Die genannten Elastomeren können sowohl in kompakter als auch in Form von Schäumen mit geschlossenen oder offenzelligen Poren vorliegen und die gebräuchlichen Zusätze, darunter z.B. auch bereits bekannte Korrosionsschutzmittel, enthalten.

Zur näheren Erläuterung der Erfindung wird im folgenden die Herstellung einiger basischer Polyether, der entsprechenden Salze sowie deren Korrosionshemmwirkung in Elastomeren beschrieben.

*1. Herstellung von basischen Polyethern*

*Beispiel 1.1*

Basischer Polyether aus N,N-Di-2-hydroxypropylmethylamin

$$HO\left(\overset{CH_3}{\overset{|}{C}}H-CH_2-\overset{CH_3}{\overset{|}{N}}-CH_2-\overset{CH_3}{\overset{|}{C}}H-O\right)_xH$$

2940 g (20 mol) N,N-Di-2-hydroxypropylmethylamin und 15 g 73%ige phosphorige Säure ($H_3PO_3$) wurden unter einer Stickstoffatmosphäre bei 200 bis 230°C 30 h lang kondensiert, wobei 560 g eines Wasser/Amin-Gemisches entfernt wurden; anschliessend wurden bei der gleichen Temperatur unter einem verminderten Druck von 20 mbar weitere 382 g eines Amin/Wasser-Gemisches abdestilliert. Es blieben 1975 g eines gelben Öles, $n_D^{20}$: 1,4670 mit einer OH-Zahl von 115 zurück, was einem mittleren statistischen Molekulargewicht von etwa 970 entspricht (X=7,5).

*Beispiel 1.2*

Basischer Polyether aus N,N-Di-2-hydroxyethyl-n-butylamin

1932 g (12 mol) N,N-Di-2-hydroxyethyl-n-butylamin und 5 g 73%ige phosphorige Säure ($H_3PO_3$) wurden unter Stickstoff bei 220 bis 230°C 32 h lang kondensiert, wobei 240 g eines Wasser/Amin-Gemisches entfernt wurden. Anschliessend wurde die Kondensation bei 20 mbar/230°C zu Ende geführt, wobei 137 g Amin abdestillierten. Es blieben 1520 g eines gelben Öls, $n_D^{20}$: 1,4730 mit einer OH-Zahl von 142 zurück, was einem mittleren Molekulargewicht von etwa 790 entspricht (X=5,5).

*Beispiel 1.3*

Basischer Polyether aus N,N-Di-2-hydroxyethylcyclohexylamin

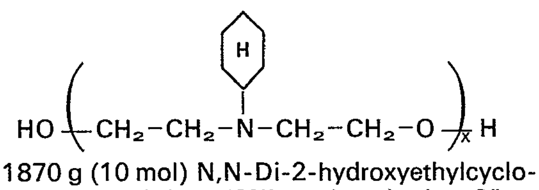

1870 g (10 mol) N,N-Di-2-hydroxyethylcyclohexylamin und 9 g 73%ige phosphorige Säure ($H_3PO_3$) wurden unter $N_2$ 8 h bei 220 bis 230°C kondensiert, wobei 194 g eines Wasser/Amin-Gemisches abdestillierten. Anschliessend wurden unter vermindertem Druck bei 20 mbar weitere 50 g gelbes Öl abdestilliert. Es blieben 1600 g eines zähflüssigen Öls, $n_D^{20}$: 1,5072, zurück mit einer OH-Zahl von 23, was einem mittleren statistischen Molekulargewicht von 4900 entspricht (X=29).

*Beispiel 1.4*

Ein basischer Polyether vom Typ 1.3, aber mit anderer OH-Zahl, wurde erhalten, wenn die Kondensation 20 h mit 4 g 73%iger $H_3PO_3$ durchgeführt wurde. Hierbei erhielt man 1670 g eines gelben Öls, $n_D^{20}$: 1,5040 mit der OH-Zahl 102, was einem mittleren statistischen Molekulargewicht von 1100 entspricht (X=6,5).

*2. Herstellung von Salzen aus basischen Polyethern und Benzoesäure*

*Beispiel 2.1*

130 g (1 Eq Aminstickstoff) des basischen Polyethers aus Beispiel 1.1 wurden unter Stickstoffatmosphäre 30 min bei 80°C mit 61 g (0,5 mol) Benzoesäure verrührt, wobei ein braunes, zähflüssiges Öl entstand. Statistisch ist jedes zweite Stickstoffatom des basischen Polyethers in das benzoesaure Salz überführt.

*Beispiel 2.2*

In gleicher Weise wurden 130 g des basischen Polyethers aus Beispiel 1.1 mit 122 g (1 mol) Benzoesäure verrührt, wobei ein braunes, zähflüssiges Öl entstand. Statistisch ist jedes Stickstoffatom in das Benzoat überführt.

*Beispiel 2.2.a*

In gleicher Weise wie unter 2.2 wurde eine Verbindung hergestellt, in der statistisch ¾ der Stickstoffatome ins Benzoat überführt sind.

*Beispiel 2.3*

143 g (1 Eq Aminstickstoff) des basischen Polyethers aus Beispiel 1.2 wurden bei 80°C 30 min lang mit 122 g (1 mol) Benzoesäure verrührt, wobei ein gelbes, zähflüssiges Öl entstand, in dem statistisch jedes Stickstoffatom ins Benzoat überführt ist.

*Beispiel 2.3.a*

In gleicher Weise wie unter 2.3 wurde eine Verbindung hergestellt, in der statistisch ¾ der Stickstoffatome ins Benzoat überführt sind.

*Beispiel 2.4*

170 g (1 Eq Aminstickstoff) des basischen Polyethers aus Beispiel 1.4 wurden unter $N_2$ 30 min lang bei 80°C mit 122 g (1 mol) Benzoesäure verrührt, wobei ein zähes gelbes Öl entstand, in dem statistisch jedes Stickstoffatom ins Benzoat überführt ist.

*Beispiel 2.4.a*

In gleicher Weise wie unter 2.4 wurde eine Verbindung hergestellt, in der statistisch ¾ der Stickstoffatome ins Benzoat überführt sind.

*3. Herstellung von Salzen aus basischen Polyethern, Benzoesäure und Ölsäure*

*Beispiel 3.1*

130 g (1 Eq Aminstickstoff) des basischen Polyethers aus Beispiel 1.1 wurden bei 80°C mit 113 g (0,4 mol) Ölsäure und 61 g (0,5 mol) Benzoesäure 30 min lang gemischt, wobei ein braunes, freifliessendes Öl entstand,in dem statistisch jedes zweite Stickstoffatom ins Benzoat und ⅖ der Stickstoffatome ins Oleat überführt sind.

*Beispiel 3.2*

Wie unter 3.1 wurde aus dem basischen Polyether des Beispiels 1.2, Ölsäure und Benzoesäure, ein Salz hergestellt, in dem statistisch jedes zweite Stickstoffatom ins Benzoat und ⅖ des Stickstoffatoms ins Oleat überführt sind.

*Beispiel 3.3*

Wie unter 3.1 wurde aus dem basischen Polyether des Beispiels 1.4, Ölsäure und Benzoesäure, ein Salz hergestellt, in dem statistisch jedes zweite Stickstoffatom ins Benzoat und ⅖ des Stickstoffatoms ins Oleat überführt sind.

*4. Die Prüfung von Salzen der allgemeinen Formel I in Elastomeren auf korrosionshemmende Wirkung*

erfolgte in Nitrilkautschuk-(NBR)-Vulkanisaten gegen über SAE-Stahl 1020 nach dem bekannten „Corrosion Test For Seal Compounds: GM 9003-P", der im November 1963, S. W-281.101, von General Motors als Engineering Standard beschrieben wurde.

Aus den zuprüfenden Vulkanisaten werden Probekörper von 10×10×3 mm hergestellt, die zwischen zwei SAE 1020-Stahlplatten von 25×50 ×5 mm eingespannt werden. Die Probekörper

werden mittels zweier Schraubvorrichtungen um 10% verformt.

Diese Prüfeinheiten werden 4 d bei 40°C in einem Exsikkator über destilliertem Wasser gelagert. Danach werden die Prüfeinheiten geöffnet, die Probekörper entformt und gegebenenfalls die Korrosionsbilder, welche sich auf den Stahloberflächen gebildet haben, beurteilt.

Die Beurteilung erfolgt visuell nach einer Eichskala, die als Fotografie tatsächlicher Korrosionsbilder vorliegt. Es werden stets Doppelbestimmungen durchgeführt und bei jeder Serie ein Standardmaterial doppelt mitgeprüft. Die Beurteilungsnoten bzw. die entsprechenden Abbildungen können wie folgt beschrieben werden:

0 Keine mit blossem Auge sichtbare Veränderung der Metalloberfläche.

0,5 Vereinzelt, kaum sichtbare Punkte.

1 Vereinzelt, kaum sichtbare Punkte, die sich aber zu einer z.T. unterbrochenen, punktierten Linie zusammenfinden.

2 Kaum sichtbare Punkte, die den Umriss des Probekörpermantels erkennen lassen.

3 Gut sichtbare Punkte, die den Umriss des Probekörpermantels deutlich erkennbar machen.

4 Wie bei 3, aber die Punkte sind deutlich grösser als bei 3 und berühren sich teilweise.

5 Wie bei 4, die Punkte sind noch grösser als bei 4 und bilden z.T. fleckenartige kleine Flächen.

Das zu prüfende Vulkanisat kann aus einem fertigen Dichtungswerkstoff bestehen oder aus einem lediglich vernetzten Kautschuk.

Mit folgender Testrezeptur wurde gearbeitet:

| | *(Gew.-Teile)* |
|---|---|
| NBR | 100,0 |
| Stearinsäure | 0,5 |
| ZnO | 3,0 |
| TMTD | 1,5 |
| ggf. Korrosionsinhibitor | 1,0 |

Mischungsherstellung erfolgte in bekannter Weise auf einem extrem gesäuberten Walzwerk. Vulkanisation erfolgte als 3,0 mm starke Platte in 30 min bei 150°C zwischen Teflonfolie in einer Presse.

Die Prüfstahloberfläche wird nach jedem Test wieder geschliffen und poliert und entfettet.

Die nicht für den Korrosionstest notwendigen Metalloberflächen sind nicht vernickelt.

Folgende Testergebnisse wurden erzielt:

| Verbindung gemäss Beispiel | Note |
|---|---|
| ohne Zusatz | 3,5 |
| 2.1 | 1 |
| 2.2 | 0,5 |
| 2.2.a | 0,5 |
| 2.3 | 1 |
| 2.3.a | 0,5 |
| 2.4 | 0,5 |
| 2.4.a | 0,5 |
| 3.1 | 0,5 |
| 3.2 | 0-0,5 |
| 3.3 | 0-0,5 |

Zum Vergleich wurden folgende Verbindungen der US-PS Nr. 4051066 (≅ DE-OS Nr. 2600989) getestet:

| Verbindung | Note |
|---|---|
| Cyclohexamethylenimindinitrobenzoat | 2 |
| N,N-Di-2-hydroxipropyl-N-methylammoniumbenzoat | 5 |
| N-Butyl-N,N-di-2-hydroxiethylammoniumbenzoat | 2,5 |
| N-Cyclohexyl-N,N-dihydroxiethylammoniumbenzoat | 3 |

Es zeigt sich, dass die erfindungsgemäss eingesetzten Verbindungen eine wesentlich bessere Korrosionsschutzwirkung entfalten.

## Patentansprüche

1. Elastomere mit korrosionshemmenden Eigenschaften, gekennzeichnet durch einen Gehalt eines Umsetzungsproduktes aus einem Amin der Formel

$$HO\left(\overset{R}{\overset{|}{C}}H-CH_2-\overset{R_1}{\overset{|}{N}}-CH_2-\overset{R}{\overset{|}{C}}H-O\right)_xH$$

in der

C Zahlen von 5 bis 30,

R Wasserstoff oder $C_1$-$C_6$-Alkyl, und

$R_1$ $C_1$-$C_{18}$-Alkyl, $C_5$-$C_6$-Cycloalkyl oder $C_7$-$C_8$-Aralkyl

darstellen,

mit einer aromatischen Carbonsäure und gegebenenfalls einer Fettsäure.

2. Elastomere gemäss Anspruch 1, gekennzeichnet durch einen Gehalt eines Umsetzungsproduktes, welches durch Einsatz einer aromatischen $C_6$-$C_{12}$-Carbonsäure hergestellt wurde.

3. Elastomere gemäss Anspruch 1, gekennzeichnet durch einen Gehalt eines Umsetzungsproduktes, welches durch Einsatz einer aromatischen $C_6$-$C_{12}$-Carbonsäure und einer $C_8$-$C_{20}$-Fettsäure hergestellt wurde.

4. Elastomere gemäss Anspruch 1, gekennzeichnet durch einen Gehalt eines Umsetzungsproduktes, welches pro Stickstoffäquivalent des Amins 0,2 bis 1 mol aromatischer Carbonsäure und 0 bis 0,8 mol Fettsäure enthält.

5. Elastomere gemäss Anspruch 1, gekennzeichnet durch einen Gehalt eines Umsetzungsproduktes, welches pro Stickstoffäquivalent des Amins 0,4 bis 1 mol aromatischer Carbonsäure und 0 bis 0,6 mol Fettsäure enthält.

6. Elastomere gemäss Anspruch 1, enthaltend 0,1 bis 10 Gew.-% des Umsetzungsproduktes.

7. Elastomere gemäss Anspruch 1, enthaltend 0,5 bis 3 Gew.-% des Umsetzungsproduktes.

8. Verwendung eines Umsetzungsproduktes aus einem Amin der Formel

$$HO\left(\overset{R}{\overset{|}{C}}H-CH_2-\overset{R_1}{\overset{|}{N}}-CH_2-\overset{R}{\overset{|}{C}}H-O\right)_xH$$

mit den in Anspruch 1 angegebenen Bedeutungen für X, R und $R_1$ mit einer aromatischen Carbonsäure und gegebenenfalls einer Fettsäure als Korrosionsschutzmittel für Elastomere.

9. Verfahren zur Herstellung von Elastomeren mit korrosionshemmenden Eigenschaften, dadurch gekennzeichnet, dass man ein Umsetzungsprodukt eines Amins der Formel

$$HO\left(\overset{R}{\overset{|}{C}}H-CH_2-\overset{R_1}{\overset{|}{N}}-CH_2-\overset{R}{\overset{|}{C}}H-O\right)_xH$$

mit den in Anspruch 1 angegebenen Bedeutungen für X, R und $R_1$ mit einer aromatischen Carbonsäure und gegebenenfalls einer Fettsäure als Korrosionsschutzmittel dem Elastomeren bei der Herstellung, Konfektionierung oder Verarbeitung zum Endprodukt zusetzt.

## Claims

1. Elastomers having corrosion-inhibiting properties, characterised in that they contain a reaction product of an amine of the formula

$$HO\left(\overset{R}{\overset{|}{C}}H-CH_2-\overset{R_1}{\overset{|}{N}}-CH_2-\overset{R}{\overset{|}{C}}H-O\right)_xH$$

in which

X represents numbers from 5 to 30,

R represents hydrogen or $C_1$-$C_6$-alkyl, and

$R_1$ represents $C_1$-$C_{18}$-alkyl, $C_5$-$C_6$-cycloalkyl or $C_7$-$C_8$-aralkyl, with an aromatic carboxylic acid and optionally a fatty acid.

2. Elastomers according to Claim 1, characterised in that they contain a reaction product which has been prepared by using an aromatic $C_6$-$C_{12}$-carboxylic acid.

3. Elastomers according to Claim 1, characterised in that they contain a reaction product which has been prepared by using an aromatic $C_6$-$C_{12}$-carboxylic acid and a $C_8$-$C_{20}$-fatty acid.

4. Elastomers according to Claim 1, characterised in that they contain a reaction product which contains, per nitrogen equivalent of the amine, 0.2 to 1 mol of an aromatic carboxylic acid and 0 to 0.8 mol of a fatty acid.

5. Elastomers according to Claim 1, characterised in that they contain a reaction product which contains, per nitrogen equivalent of the amine, 0.4 to 1 mol of an aromatic carboxylic acid and 0 to 0.6 mol of a fatty acid.

6. Elastomers according to Claim 1, containing 0.1 to 10% by weight of the reaction product.

7. Elastomers according to Claim 1, containing 0.5 to 3% by weight of the reaction product.

8. Use of a reaction product of an amine of the formula

$$HO\left(\overset{R}{\overset{|}{C}}H-CH_2-\overset{R_1}{\overset{|}{N}}-CH_2-\overset{R}{\overset{|}{C}}H-O\right)_xH$$

with the meanings for X, R and $R_1$ given in Claim 1, with an aromatic carboxylic acid and, optionally, a fatty acid, as a corrosion inhibitor for elastomers.

9. Process for the preparation of elastomers having corrosion-inhibiting properties, characterised in that a reaction product of an amine of the formula

$$HO\left(\overset{R}{\overset{|}{C}}H-CH_2-\overset{R_1}{\overset{|}{N}}-CH_2-\overset{R}{\overset{|}{C}}H-O\right)_xH$$

with the meanings for X, R and $R_1$ given in Claim 1, with an aromatic carboxylic acid and, optionally, a fatty acid, is added as a corrosion inhibitor to the elastomer during the preparation, manufacture or processing to the end product.

## Revendications

1. Elastomères doués de propriétés inhibitrices de corrosion, caractérisés en ce qu'ils contiennent un produit de réaction d'une amine de formule

$$HO\left(\overset{R}{\overset{|}{C}}H-CH_2-\overset{R_1}{\overset{|}{N}}-CH_2-\overset{R}{\overset{|}{C}}H-O\right)_xH$$

dans laquelle

X désigne des nombres de 5 à 30,

R est l'hydrogène ou un groupe alkyle en $C_1$ à $C_6$,

$R_1$ est un groupe alkyle en $C_1$ à $C_{18}$, cycloalkyle en $C_5$ ou $C_6$ ou aralkyle en $C_7$ ou $C_8$,

avec un acide carboxylique aromatique et, le cas échéant, un acide gras.

2. Elastomères suivant la revendication 1, caractérisés en ce qu'ils contiennent un produit de réaction qui a été préparé en utilisant un acide carboxylique aromatique en $C_6$ à $C_{12}$.

3. Elastomères suivant la revendication 1, caractérisés en ce qu'ils contiennent un produit de réaction qui a été préparé en utilisant un acide carboxylique aromatique en $C_6$ à $C_{12}$ et un acide gras en $C_8$ à $C_{20}$.

4. Elastomères suivant la revendication 1, caractérisés en ce qu'ils contiennent un produit de réaction qui renferme, par équivalent d'azote d'amine, 0,2 à 1 mol d'acide carboxylique aromatique et 0 à 0,8 mol d'acide gras.

5. Elastomères suivant la revendication 1, caractérisés en ce qu'ils contiennent un produit de réaction qui renferme, par équivalent d'azote d'amine, 0,4 à 1 mol d'acide carboxylique aromatique et 0 à 0,6 mol d'acide gras.

6. Elastomères suivant la revendication 1, contenant 0,1 à 10% en poids du produit de réaction.

7. Elastomères suivant la revendication 1, contenant 0,5 à 3% en poids du produit de réaction.

8. Utilisation d'un produit de réaction d'une amine de formule

$$HO\left(\overset{R}{\overset{|}{C}}H-CH_2-\overset{R_1}{\overset{|}{N}}-CH_2-\overset{R}{\overset{|}{C}}H-O\right)_xH$$

où X, R et $R_1$ ont les définitions indiquées dans la revendication 1, avec un acide carboxylique aromatique et, le cas échéant, un acide gras, comme agent anticorrosif pour élastomères.

9. Procédé de production d'élastomères doués de propriétés inhibitrices de corrosion, caractérisé en ce qu'on ajoute à l'élastomère, comme agent anticorrosif lors de la production, de la confection et de la transformation en produit final, un produit de réaction d'une amine de formule

$$HO\text{-}(CH(R)-CH_2-N(R_1)-CH_2-CH(R)-O)_xH$$

où X, R et $R_1$ ont les définitions indiquées dans la revendication 1, avec un acide carboxylique aromatique et, le cas échéant, un acide gras.